# EUROPEAN PATENT APPLICATION

(11) **EP 3 441 841 A1**
(43) Date of publication of application: **13.02.2019**
(21) Application number: 18184995.1
(22) Date of filing: 23.07.2018
(51) Int. Cl.: G05D 1/02

(54) **VIRTUAL TOWING SYSTEM**

(30) Priority: 10.08.2017 US 201715673863
(71) Applicant: Aptiv Technologies Limited, St. Michael (BB)
(72) Inventor: LAUR, Michael, H, MISSION VIEJO, CA 92692 (US); VIJAYAN, Indu, SUNNYVALE, CA 94086 (US)
(74) Representative: Robert, Vincent

(57) **Abstract**

A virtual towing system (10) for an automated vehicle includes a disabled-vehicle (12) equipped with a first-transceiver (20) that broadcasts a tow-request (22) when perception-sensors (14) of the disabled-vehicle (12) have malfunctioned. The system (10) also includes a tow-vehicle (16) equipped with a second-transceiver (24) that transmits guidance-data (26) to the first-transceiver (20) in response to the tow-request (22), whereby the disabled-vehicle (12) operates in accordance with the guidance-data (26).

## Description

### TECHNICAL FIELD

This disclosure generally relates to a virtual towing system, and more particularly relates to a towing-vehicle assisting a disabled-vehicle to reach a destination such as a repair-facility or a safe place to park the disabled-vehicle until the disabled-vehicle can be repaired or more conventionally transported.

### BACKGROUND

When an automated vehicle becomes disabled due to sensor malfunction it may simply stop at its present location or on the side of the road. This may cause traffic jams and/or safety issues for occupants of the automated vehicle and/or other vehicles.

### SUMMARY

Described herein is a virtual towing system that uses perception sensors and processing capability of a dedicated cooperating tow-vehicle to maneuver a disabled-vehicle to a specified location. The tow-vehicle may be a dedicated towing vehicle or any cooperating vehicle with necessary capabilities. The tow-vehicle uses its perception-sensor and path planning to, for example, output brake, steering, and acceleration commands to the towed-vehicle.

In accordance with one embodiment, a virtual towing system for an automated vehicle is provided. The system includes a disabled-vehicle equipped with a first-transceiver that broadcasts a tow-request when perception-sensors of the disabled-vehicle have malfunctioned. The system also includes a tow-vehicle equipped with a second-transceiver that transmits guidance-data to the first-transceiver in response to the tow-request, whereby the disabled-vehicle operates in accordance with the guidance-data.

The tow-request may include a destination of the disabled-vehicle. The guidance-data may include steering-guidance used by the disabled-vehicle to control a steering-direction the disabled-vehicle. The guidance-data may include speed-guidance used by the disabled-vehicle to control a vehicle-speed of the disabled-vehicle. The guidance-data may include perception-data from perception-sensors of the tow-vehicle, and the perception-data is used by the disabled-vehicle to operate the disabled-vehicle.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a virtual towing system in accordance with one embodiment; and
Fig. 2 is scenario encountered by the system of Fig. 1 in accordance with one embodiment.

### DETAILED DESCRIPTION

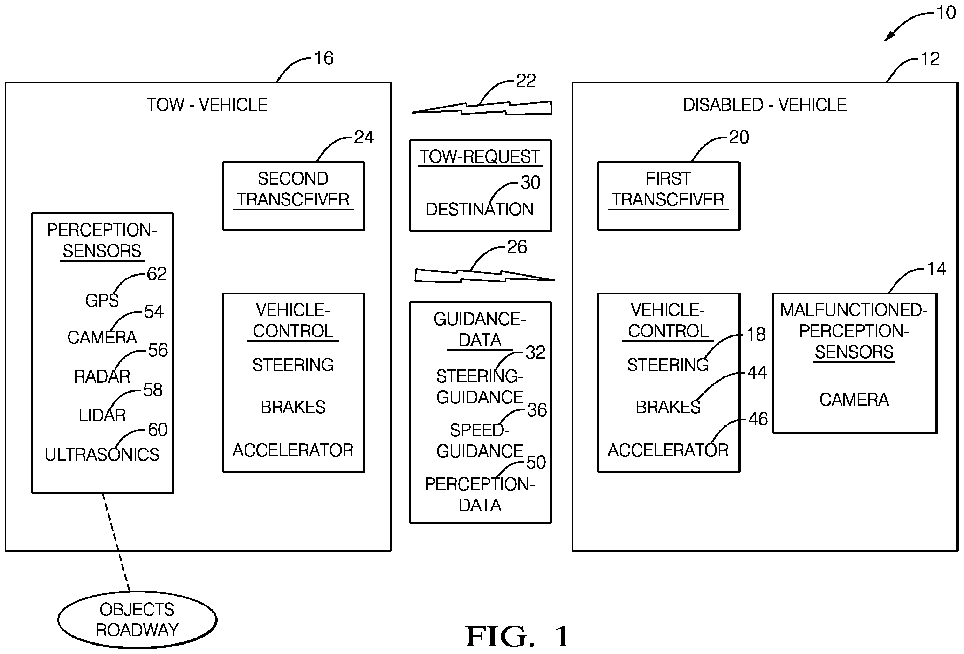

Fig. 1 illustrates a non-limiting example of a virtual towing system 10, hereafter referred to as the system 10. The system 10 is generally intended for towing an automated vehicle, e.g. a disabled-vehicle 12, that for whatever reason is unable to detect or determine enough details about the environmental surroundings for the disabled-vehicle 12 to operate according to the intended design or configuration of the disabled-vehicle 12. As used herein, the term 'disable-vehicle' may be applied to an automated vehicle when one or more instances of the perception-sensors 14 (e.g. camera, radar, lidar, ultrasonic transducers, etc.) of the disabled-vehicle 12 have malfunctioned or are otherwise unable to detect the roadway and/or objects proximate to the disabled-vehicle 12. By way of example and not limitation, a camera on the disabled-vehicle 12 may have malfunctioned or have been damaged by road-debris, so the disabled-vehicle 12 could be characterized as blind or partially blind.

As used herein, the term automated vehicle may apply to instances when the disabled-vehicle 12 is being operated in an automated-mode, i.e. a fully autonomous mode, where a human-operator (not shown) of the disabled-vehicle 12 may do little more than designate a destination in order to operate the disabled-vehicle 12. However, full automation is not a requirement. It is contemplated that the teachings presented herein are useful when the disabled-vehicle 12 is operated in a manual-mode where the degree or level of automation may be little more than providing an audible or visual warning to the human-operator who is generally in control of the steering, accelerator, and brakes of the disabled-vehicle 12. For example, the system 10 may merely assist the human-operator as needed to change lanes and/or avoid interference with and/or a collision with, for example, an object such as another-vehicle, a pedestrian, or a road sign.

As will be described in more detail below, the system 10 described herein provides for 'virtual towing' by a tow-vehicle 16. It is emphasized that in many respects virtual towing is not comparable to physical towing by a traditional tow-truck. As used herein, virtual towing means that the tow-vehicle 16 helps to lead or guide the disabled-vehicle 12 without any physical contact being made between the tow-vehicle 16 and the disabled-vehicle 12. That is, the tow-vehicle 16 does not physically tow the disabled-vehicle 12, but rather communicates sufficient information to the disabled-vehicle 12 so that the disabled-vehicle can operate the vehicle-controls 18 (e.g. steering, brakes, accelerator) of the disabled-vehicle 12 in order to reach some destination without relying on information from the malfunctioned instances of the perception-sensors 14.

In order to receive the information, the disabled-vehicle 12 is equipped with transceiver, hereafter referred to as a first-transceiver 20, that broadcasts a tow-request 22 when it is determined that enough instances of the perception-sensors 14 have malfunctioned that the disabled-vehicle 12 is no longer able to operate as intended, e.g. in a fully-autonomous or automated mode. For example, if the disabled-vehicle 12 does not have a redundant camera, and the only forward looking camera on the disabled-vehicle has malfunctioned, then it may be that not enough information can be gathered by the disabled-vehicle 12 to safely operate on its own. The first-transceiver 20 may be a radio-frequency (RF) transceiver such as a direct-short-range-communications (DSRC) type transceiver capable of vehicle-to-vehicle (V2V) communications, as will be recognized by those in the automated vehicle arts.

It follows that the tow-vehicle 16 is also equipped with a transceiver, hereafter referred to as the second-transceiver 24, which receives or detects the tow-request 22 and then is used to transmit guidance-data 26 to the first-transceiver 20 in response to the tow-request 22. It is contemplated that the tow-vehicle 16 need not be a specialized vehicle specifically designed for towing. That is, the tow-vehicle 16 could be the exact same configuration as the disabled-vehicle 12, other than the disabled-vehicle 12 having one or more malfunctioned instances of the perception-sensors 14. It is contemplated that suitable forms of the guidance-data 26 may contain or communicate distinct forms of information. Each of the various forms would be suitable for the disabled-vehicle 12 to operate (e.g. steer, accelerate/brake) in accordance with the guidance-data 26 to reach some destination such as a repair facility or a safe place to park the disabled-vehicle 12 until repairs can be made or a traditional tow truck is able to transport the disabled-vehicle 12.

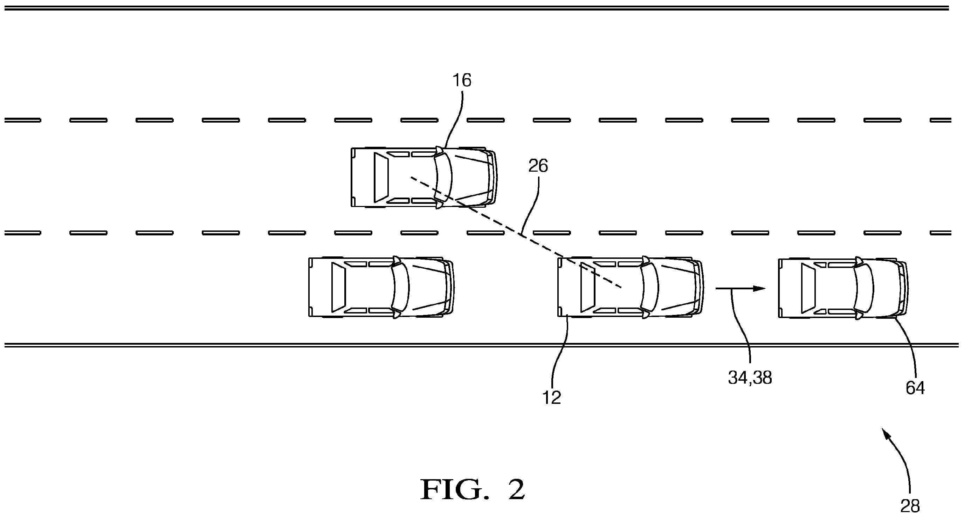

Fig. 2 illustrates a non-limiting example of a scenario 28 where the disabled-vehicle 12 is traveling a roadway while being virtually towed by the tow-vehicle 16. It is contemplated that it is not necessary for the tow-vehicle 16 to be immediately in front of the disabled-vehicle 12 as would be the case for physical towing of the disabled-vehicle 12. It is also contemplated that the disabled-vehicle 12 may receive guidance-data 26 from more than a single instance of the tow-vehicle 16. It is also contemplated that which of the other vehicles proximate to the disabled-vehicle 12 that is primarily responsible for virtually towing the disabled-vehicle 12 may change because, for example, the instance of the other-vehicles presently designated as the tow-vehicle 16 may have a different destination that a destination 30 (Fig. 1) of the disabled-vehicle 12 that may have been communicated in the tow-request 22. That is, while the instance of the other-vehicles indicated to be the tow-vehicle in Fig. 2 may have been the best choice when the tow-request 22 was initially broadcast, over time a second instance of the other-vehicles may assume the responsibility of being the tow-vehicle 16 for the disabled-vehicle 12 because the second instance has an intended route that passes closer to the destination 30 than does the vehicle presently designated as the tow-vehicle 16.

Continuing to refer to Figs. 1 and 2, the guidance-data 26 may include steering-guidance 32 used by the disabled-vehicle 12 to control a steering-direction 34 the disabled-vehicle 12. The steering-guidance 32 may include a numerical value indicative of how to operate or actuate the steering 40 of the disabled-vehicle 12, i.e. how far to turn the steering-wheels (not shown) of the disabled-vehicle 12. Alternatively, the steering 40 may be controlled based on a compass heading for the disabled-vehicle 12 recommended by the tow-vehicle 16. It is contemplated that the tow-vehicle 16 may directly control the steering 40 of the disabled-vehicle 12, or that the disabled-vehicle 12 may control the steering 40 based on an interpretation or analysis of information included in the guidance-data 26.

Similarly, the guidance-data 26 may include speed-guidance 36 used by the disabled-vehicle 12 to control a vehicle-speed 38 of the disabled-vehicle 12. The speed-guidance 36 may be a speed-value or speed-adjustment (e.g. increase or decrease the vehicle-speed 38) used by the disabled-vehicle 12 to operate the brakes 44 and the accelerator 42 of the disabled-vehicle 12. Alternatively, the speed-guidance 36 may be direct instructions from the tow-vehicle 16 for operating the brakes 44 and/or accelerator 46. For example, the speed-guidance 36 may indicate how much braking pressure or braking effort the disabled-vehicle 12 should apply to the brakes 44 so that, in effect, the tow-vehicle 16 is in direct control of the brakes 44 of the disabled-vehicle 12.

In another embodiment of the system 10, rather than the tow-vehicle 16 providing the steering-guidance 32 and/or the speed-guidance 36 to directly or indirectly operate the steering 40, brakes 44, and/or accelerator 46 of the disabled-vehicle 12, the guidance-data 26 may include perception-data 50 from perception-sensors 52 of the tow-vehicle 16. For example, the perception-data 50 may include images captured by a camera 54, range/range-rate/direction data of targets detected by a radar 56 and/or a lidar 58 and/or an ultrasonic-transducer 60. The perception-data 50 may also include world coordinate information from a global-positioning-system (GPS) receiver 62 of the tow-vehicle 16. Accordingly, the perception-data 50 may be used by the disabled-vehicle 12 to operate the disabled-vehicle 12. For example, the perception-data 50 may indicate the location of an instance of a forward-vehicle 64 traveling forward of the disabled-vehicle 12, and the disabled-vehicle 12 may use that information to maintain a safe following distance behind that forward-vehicle 64.

In another embodiment of the system 10, steering, brakes, and accelerator data of the tow-vehicle 16 may be communicated to the disabled-vehicle 12 and used to operate the steering 40, brakes 44, and accelerator 46 of the disabled-vehicle. That is, the disabled-vehicle 12 may operate the vehicle-controls of the disabled-vehicle 12 in a manner that mimics those of the tow-vehicle 16. Of course it is recognized that the timing and degree of that simulating would need to be offset to compensate for the relative positions of the two-vehicle 16 and the disabled-vehicle 12. For this embodiment, it is contemplated that it would be preferable for the tow-vehicle 16 to be immediately in front of the disabled-vehicle 12, e.g. at the position of the forward-vehicle 64, so that a simple delay-function, which is adjusted for speed, could be used to operate the vehicle-controls 18 of the disabled-vehicle 12 based on the vehicle-controls of the tow-vehicle 16

Accordingly, a virtual towing system (the system 10), and a method of operating the system 10 is provided. The system 10 described herein provides the means by which any automated vehicle could act as the tow-vehicle 16 to help assist the disabled-vehicle 12 to reach an instance of the destination 30 where the disabled-vehicle 12 can be safely repaired or parked. This avoids the delay associated with waiting for a tow-truck to physically tow the disabled-vehicle 12.

While this invention has been described in terms of the preferred embodiments thereof, it is not intended to be so limited, but rather only to the extent set forth in the claims that follow.

## Claims

1. A virtual towing system (10) for an automated vehicle, said system (10) comprising:
a disabled-vehicle (12) equipped with a first-transceiver (20) that broadcasts a tow-request (22) when perception-sensors (14) of the disabled-vehicle (12) have malfunctioned;
a tow-vehicle (16) equipped with a second-transceiver (24) that transmits guidance-data (26) to the first-transceiver (20) in response to the tow-request (22), whereby the disabled-vehicle (12) operates in accordance with the guidance-data (26).

2. The system (10) in accordance with claim 1, wherein the tow-request (22) includes a destination (30) of the disabled-vehicle (12).

3. The system (10) according to any one of the preceding claims, wherein the guidance-data (26) includes steering-guidance (32) used by the disabled-vehicle (12) to control a steering-direction (34) the disabled-vehicle (12).

4. The system (10) according to any one of the preceding claims, wherein the guidance-data (26) includes speed-guidance (36) used by the disabled-vehicle (12) to control a vehicle-speed (38) of the disabled-vehicle (12).

5. The system (10) according to any one of the preceding claims, wherein the guidance-data (26) includes perception-data (50) from perception-sensors (14) of the tow-vehicle (16), and the perception-data (50) is used by the disabled-vehicle (12) to operate the disabled-vehicle (12).
